# EUROPÄISCHE PATENTSCHRIFT

(11) **EP 0 885 348 B1**
(45) Veröffentlichungstag und Bekanntmachung des Hinweises auf die Patenterteilung: **03.09.2003**
(21) Anmeldenummer: 97915299.8
(22) Anmeldetag: 24.02.1997
(51) Int. Cl.: F01K 13/02

(54) **VERFAHREN UND VORRICHTUNG ZUR SCHNELLEN LEISTUNGSREGELUNG EINER KRAFTWERKSANLAGE**
PROCESS AND DEVICE FOR RAPID POWER CONTROL OF A POWER STATION
PROCEDE ET DISPOSITIF DE REGULATION RAPIDE DE LA PUISSANCE D'UNE CENTRALE

(30) Priorität: 07.03.1996 DE 19608873
(43) Veröffentlichungstag der Anmeldung: 23.12.1998
(73) Patentinhaber: SIEMENS AKTIENGESELLSCHAFT, 80333 München (DE)
(72) Erfinder: ZAVISKA, Oldrich, D-91058 Erlangen (DE); ACKENHEIL, Reinhold, D-90542 Eckental (DE)
(86) Internationale Anmeldenummer: DE9700328
(87) Internationale Veröffentlichungsnummer: WO97033074

(56) Entgegenhaltungen:
- DE-A- 4 344 118
- VGB KRAFTWERKSTECHNIK, Bd. 60, Nr. 1, Januar 1980, Seiten 18-23, XP000670759 FALGENHAUER G: "BEITRAGSMOEGLICHKEITEN DER SPEISEWASSER-, KONDENSAT- UND ANZAPFDAMPFSTROEME ZUR SCHNELLEN LEISTUNGSAENDERUNG FOSSIL BEFEUERTER KRAFTWERKSBLOECKE" in der Anmeldung erwähnt

## Beschreibung

Die Erfindung bezieht sich auf ein Verfahren zur schnellen Leistungsregelung einer Kraftwerksanlage mit einem eine Dampfturbine und einen Generator aufweisenden Turbosatz, wobei zur Einstellung einer Generatormehrleistung im Anlagenprozeß vorhandene Energiespeicher aktiviert werden. Sie bezieht sich weiter auf eine Vorrichtung zur Durchführung des Verfahrens.

Neben einer Ausregelung von Frequenzabweichungen innerhalb eines Energieversorgungssystems ist insbesondere auch eine vorgegebenen Übergabeleistung an Kuppelstellen zu Teilnetzen, aus denen sich ein Verteilungsnetz (Verbundnetz oder Inselnetz) zusammensetzt, einzuhalten. Eine Forderung besteht daher darin, daß eine schnelle Leistungserhöhung eines Kraftwerksblocks innerhalb von Sekunden verfügbar ist.

Möglichkeiten zur schnellen Leistungsregelung und Frequenzstützung sind in der Druckschrift "VGB Kraftwerkstechnik", Heft 1, Januar 1980, Seiten 18 bis 23, beschrieben. Während für eine schnelle Leistungsregelung im Bereich von Sekunden (Sekundenreserve) mehrere gleichzeitig oder alternativ durchführbare Eingriffsmöglichkeiten bestehen, ist für eine verbleibende Veränderung der Leistung eines Kraftwerksblocks eine Ånderung der Brennstoffzufuhr erforderlich. In einer fossilbefeuerten Kraftwerksanlage werden daher zur Überbrükkung von Verzugszeiten innerhalb der ersten Sekunden zuvor in gedrosselter Stellung gehaltene Stellventile der Dampfturbine geöffnet und dadurch verfügbare Dampf- oder Energiespeicher praktisch ohne Verzögerung aktiviert und entladen.

Neben einer Leistungserhöhung durch die Aufhebung der Androsselung von Stellventilen der Dampfturbine werden auch im Wasser-Dampf-Kreislauf der Dampfturbine vorgesehene Vorwärmer, die mittels Anzapfdampf aus der Dampfturbine beheizt werden, abgeschaltet. Ein gleichzeitig durch die Niederdruckwärmer geführter Kondensatstrom kann innerhalb weniger Sekunden gestoppt und wieder erhöht werden. Diese Maßnahme zur schnellen Leistungsregelung in fossilbefeuerten Kraftwerksblöcken durch Abschaltung der Vorwärmer mit Kondensatstop als eine weitere Möglichkeit zur Aktivierung von in Reserve gehaltenen Energiespeichern ist zum Beispiel auch in der Deutschen Patentschrift DE-PS 33 04 292 beschrieben.

Zur Regelung und/oder Steuerung der schnellen Sekundenreserve, daß heißt einer geregelten Beanspruchung von Dampfströmen zu Regenerativvorwärmern und/oder Heizkondensatoren sowie des Prozeßdampfes und des Kondensats im Wasser-Dampf-Kreislauf der Dampfturbine einer Kraftwerksanlage, wird daher üblicherweise eine Regeleinrichtung eingesetzt. Diese bewirkt für eine schnelle Leistungsregelung, daß heißt zur Akcivierung von Energiespeichern innerhalb von Sekunden, eine Drosselung der Dampfzufuhr zu Vorwärmern, eine Drosselung des Prozeßdampfes und/oder eine Drosselung des Kondensats. Dabei werden Stellungs-Sollwerte für Regelventile in Turbinenanzapfungen und für Stellorgane zur Kondensateinstellung derart gebildet, daß eine geforderte Generatormehrleistung erreicht wird. Nachteilig dabei ist jedoch, daß die Koordinierung sowohl der Stellglieder oder Stellorgane in Turbinenanzapfungen als auch der Kondensat- und Nebenkondensatregelung außerordentlich schwierig ist. Darüber hinaus sind die Prioritäten der Inanspruchnahme der einzelnen Maßnahmen zur schnellen Leistungsregelung nicht berücksichtigt. Außerdem ist aufgrund der üblicherweise nicht linearen Regelstrecke die Regelgüte bisher nicht besonders hoch.

Die Erfindung liegt daher die Aufgabe zugrunde, ein Verfahren zur schnellen Leistungsbereitstellung in einer Kraftwerksanlage anzugeben, mit dem eine besonders wirkungsvolle Regelung erreicht wird. Dies soll bei einer zur Durchführung des Verfahrens besonders geeigneten Vorrichtung mit einfachen Mitteln erzielt werden.

Bezüglich des Verfahrens wird diese Aufgabe erfindungsgemäß dadurch gelöst, indem zusätzlich zur Generatorleistung mindestens ein, insbesondere von der Dampferzeuger-Regelung der Kraftwerksanlage bereitgestellter, Wärmeleistungswert als eine weitere, den aktuellen Betriebszustand charakterisierende Prozeßgröße zur Ermittlung einer Anzahl von Stellungs-Sollwerten herangezogen oder verwendet wird. Unter Generatorleistung wird hierbei die Ist- oder Solleistung, der Mehrleistung-Sollwert oder -Istwert oder die maximal mögliche Leistung des Generators verstanden.

Die Erfindung geht dabei von der Überlegung aus, unter Berücksichtigung des aktuellen Betriebszustandes eine Maßnahmenkombination und damit eine Einsatzstrategie zur Aktivierung der Energiespeicher zu ermitteln, wobei eine Vielzahl von Prozeßwerten oder Prozeßgrößen des Anlagenprozesses auszuwerten ist. Dazu sollte die End- und Aufladung der zur Verfügung stehenden Energiespeicher nach einer Bewertung der Mehrleistungsforderung geregelt werden, wobei eine auf technischen und wirtschaftlichen Aspekten basierende Einsatzstrategie für die Aktivierung der einzelnen Energiespeicher verwendet werden kann.

Vorzugsweise werden zur Bestimmung des aktuellen Betriebszustands der Gesamtanlage oder eines einzelnen Kraftwerksblocks als zusätzliche weitere Prozeßgrößen auch die Fernwärmeleistung der Anlage sowie ein ausgekoppelter Prozeßdampfmassenstrom und/oder die Androsselgrade von Stellorganen der Dampfturbine, insbesondere eines mit der Dampfturbine zuströmseitig verbundenen Frischdampf-Stellventils, verwendet. Außerdem werden weiter zweckmäßigerweise Werte oder Daten über Begrenzungen der Energiespeicher, z.B. hinsichtlich der Kannlast der Anlage, berücksichtigt. Ferner werden zweckmäßigerweise Daten über die technologische Bereitschaft oder Aktivierbarkeit der einzelnen Energiespeicher berücksichtigt, deren Inhalte vom Frischdampf-, Anzapfdampf-, Abdampfund/oder Kondensatstrom im Wasser-Dampf-Kreislauf der Dampfturbine abhängen.

Bezüglich der Vorrichtung wird die genannte Aufgabe erfindungsgemäß gelöst durch eine Regeleinrichtung, deren Eingänge die Solleistung (Mehrleistungs-Sollwert) und die Istleistung (Mehrleistungs-Istwert) des Generators sowie mindestens einen Wärmeleistungswert als weitere Prozeßgröße beinhalten, und dessen Ausgänge - zur Aktivierung der einzelnen Energiespeicher - Stellungs-Sollwerte für mit der Dampfturbine verbundene Stellorgane angeben. Die Stellorgane können Frischdampf-, Anzapfdampf- oder Abdampf-Stellventile oder Klappen sowie Haupt- oder Nebenkonensat-Förderpumpen sein.

In zweckmäßiger Ausgestaltung umfaßt die Regeleinrichtung ein erstes Regelmodul, dessen Eingänge die Solleistung und die Istleistung des Generators sowie die weiteren Prozeßgrößen oder Betriebswerte beinhalten, und dessen Ausgang Anteilswerte einer Maßnahmenkombination zur Bereitstellung einer Reserveleistung angibt. Vorzugsweise weist das erste Regelmodul auch einen Eingang für den Drosselgrad mindestens eines mit der Dampfturbine zuströmseitig verbundenen Stellorgans auf.

Zweckmäßigerweise umfaßt die Regeleinrichtung weiter ein zweites Regelmodul, dessen Eingang mit einem die Maßnahmenkombination angebenden Ausgang des ersten Regelmoduls verbunden ist, und dessen Ausgänge Stellungs-Sollwerte für Dampf-Stellorgane angeben. Ein ausgangsseitig mit diesem Regelmodul verbundenes, als Korrektur-Regler arbeitendes drittes Regelmodul beinhaltet zweckmäßigerweise als Eingänge die Leistungswerte des Generators.

Die Regeleinrichtung umfaßt ferner zweckmäßigerweise ein viertes Regelmodul, dessen Eingänge mit jeweils einem Ausgang des ersten und des zweiten Regelmoduls verbunden sind, und dessen Ausgänge Stellungs-Sollwerte für Kondensat-Stellorgane angeben. Ein mit dem ersten Regelmodul verbundenes fünftes Regelmodul der Regeleinrichtung dient zur Korrektur oder Anpassung des aktuellen Drosselgrads mindestens eines Scellorgans.

Die mit der Erfindung erzielten Vorteile bestehen insbesondere darin, daß durch Ermittlung einer Maßnahmenkombination zur Aktivierung von Energiespeichern in einem Turbosatz unter Berücksichtigung einer Anzahl von anlagenrelevanten Prozeßgrößen eine besonders günstige Lösung der oft gegenläufigen Anforderungen und Bedingungen für eine Mehrleistungsaktivierung ermöglicht ist. Dabei ist unter Verwendung einer geeigneten Einsatzstrategie für die Aktivierung der Energiespeicher ein bestmögliches Gesamtergebnis gewährleistet. Bei der Erstellung der Einsatzstrategie können Einschränkungen berücksichtigt werden, die sich sowohl aus der vorgegebenen Bereitstellung der Regelreserve, als auch aus Vorschriften über eine Strom-, Prozeß- und/oder Heizdampfversorgung sowie aus technologischen Gründen ergeben.

Ein Ausführungsbeispiel der Erfindung wird anhand einer Zeichnung näher erläutert. Darin zeigen:
- Figur 1: ein Blockschaltbild eines Turbosatzes als Prozeßabschnitt eines Kraftwerksblocks und
- Figur 2: ein Blockschaltbild einer Regeleinrichtung für den Prozeßabschnitt gemäß Figur 1.

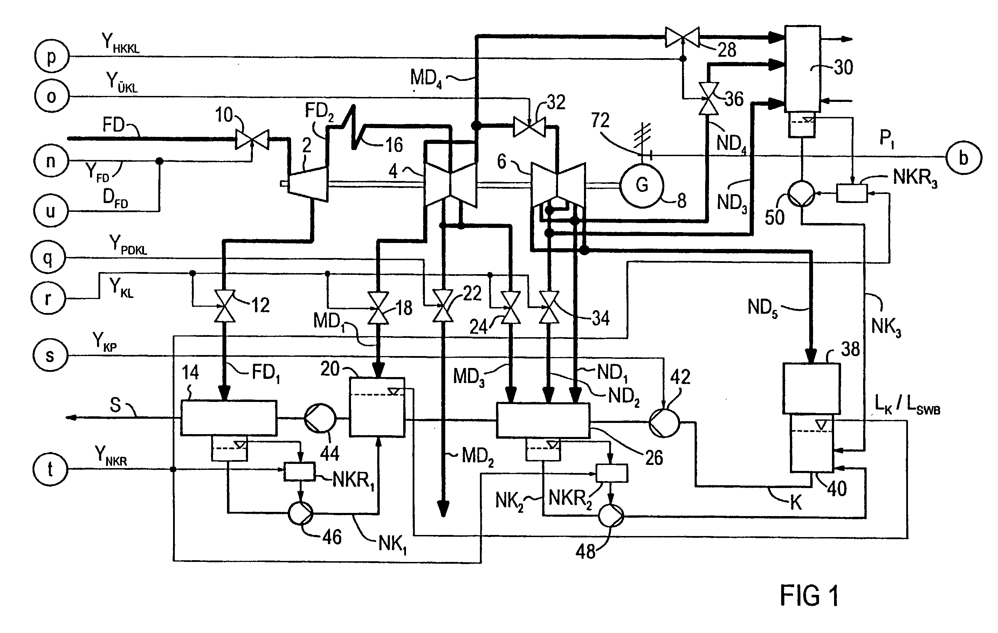

Figur 1 zeigt ein prinzipielles Blockschaltbild eines Prozeßabschnitts eines Kraftwerksblocks mit einem Turbosatz, der sich aus einer Hochdruck-Teilturbine 2, einer Mitteldruck-Teilturbine 4 und einer Niederdruck-Teilturbine 6 sowie einem Generator 8 zusammensetzt. Beim Betrieb des Turbosatzes wird Frischdampf FD über ein Frischdampf-Stellventil 10 in die Hochdruck-Teilturbine 2 eingeleitet. Ein mittels eines Stellventils 12 (Klappe KL) einstellbarer Teilstrom FD₁ wird der Hochdruck-Teilturbine 2 für eine Hochdruck-Vorwärmstraße 14 entnommen. Der Abdampf FD₂ aus der Hochdruck-Teilturbine 2 wird über einen Zwischenüberhitzer 16 der Mitteldruck-Teilturbine 4 zugeführt.

Aus der Mitteldruck-Teilturbine 4 erfolgt eine weitere Dampfentnahme. Dazu wird mittels eines Stellventils 18 (Klappe KL) ein einstellbarer erster Teilstrom MD₁ für einen Speisewasserbehälter 20 entnommen. Eine weitere Entnahme erfolgt über einen mittels eines Stellventils 22 (Prozeßdampfklappe PDKL) einstellbaren zweiten Teilstrom MD₂ als Prozeßdampf. Ferner erfolgt eine Entnahme über einen mittels eines Stellventils 24 (Klappe KL) einstellbaren dritten Teilstroms MD₃ für einen Niederdruck-Vorwärmstraße 26. Eine mittels eines Stellventils 28 (Heizkondensatklappe HKKL) einstellbare erste Teilmenge MD₄ des Abdampfes der Mitteidruck-Teilturbine 4 wird einem Heizkondensator 30 zugeführt. Eine ebenfalls einstellbare zweite Teilmenge MD₅ des Abdampfes der Mitteldruck-Teilturbine 4 wird über eine Überströmklappe 32 (ÜKL) der Niederdruck-Teilturbine 6 zugeführt.

Aus der Niederdruck-Teilturbine 6 erfolgt ebenfalls eine Dampfentnahme für die Niederdruck-Vorwärmstraße 26 und für den Heizkondensator 30. Dazu werden ein erster Teilstrom ND₁ direkt und ein zweiter Teilstrom ND₂ über ein Stellventil 34 (Klappe KL) der Niederdruck-Vorwärmstraße 26 zugeführt. Ebenso werden dem Heizkondensator 30 ein dritter Teilstrom ND₃ direkt und einer vierter Teilstrom ND₄ über ein Steliventil 36 (Heizkondensatklappe HKKL) zugeführt. Der Abdampf ND₅ aus der Niederdruck-Teilturbine 6 kondensiert in einem Kondensator 38.

Das Hauptkondensat K wird aus dem Hotwell 40 des Kondensators 38 mittels einer Kondensatpumpe 42 über die Niederdruck-Vorwärmstraße 26 in den Speisewasserbehälter 20 gefördert. Aus dem Speisewasserbehälter 20 wird mittels einer Speisewasserpumpe 44 Speisewasser S über die Hochdruck-Vorwärmstraße 14 gefördert. Nebenkondensat NK₁ aus der Hochdruck-Vorwärmstraße 14 wird über eine Nebenkondensatpumpe 46 in den Speisewasserbehälter 20 gefördert. Ebenso wird Nebenkondensat NK₂ aus der Niederdruck-Vorwärmstraße 26 über eine Nebenkondensatspumpe 48 in den Kondensator 38, daß heißt in dessen Hotwell 40, gefördert. Außerdem wird Nebenkondensat NK₃ aus dem Heizkondensator 30 mittels einer Nebenkondensatpumpe 50 in den Hotwell 40 des Kondensators 38 gefördert.

Während die Förderung des Hauptkondensats K und des Speisewassers S über eine Niveauregelung L_{K}/L_{SWB} erfolgt, wird die Förderung des Nebenkondensats NK_{1,2,3} über separate Niveauregelungen NKR₁, NKR₂ bzw. NKR₃ eingestellt. Letzteren wird ein gemeinsamer Stellungs-Sollwert Y_{NKR} zugeführt.

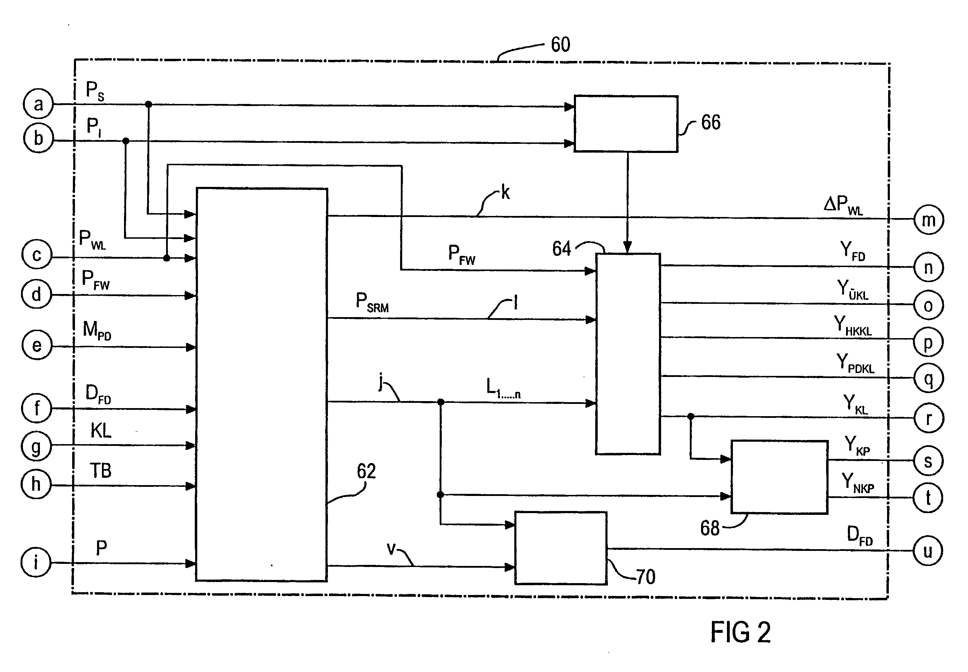

Die Vorrichtung zur schnellen Leistungsregelung ist in Figur 2 dargestellt. Sie umfaßt eine Regeleinrichtung 60 mit fünf Regelmodulen 62, 64, 66, 68 und 70. Die Regeleinrichtung 60 erhält als Eingangsgrößen a und b eine Leistungsanforderung P_{S} und einen Leistungs- oder Mehrleistungs-Istwert P_{I}. Der Mehrleistungs-Istwert P_{I} wird mittels einer Meßvorrichtung 72 am Generator 8 (Figur 1) gemessen. Als weitere Eingangsgröße c erhält die Regeleinrichtung 60 einen Wärmeleistungs-Sollwert P_{WL}, der in nicht näher dargestellter Weise der Dampferzeugerregelung des Kraftwerksblocks entnommen wird. Ferner erhält die Regeleinrichtung 60 als Eingangsgrößen d bis h Informationen über den Betriebszustand des Kraftwerksblocks. Diese sind als Eingangsgröße d die Fernwärmeleistung P_{FW}, als Eingangsgröße e die Prozeßdampfentnahmemenge oder der Prozeßdampfmassenstrom M_{PD}, als Eingangsgröße f der Drosselgrad D_{FD} des Frischdampfstellventils 10, als Eingangsgröße g die Kannlast KL des Kraftwerksblocks und als Eingangsgröße h die technologische Bereitschaft TB verfügbarer Energiespeicher. Weitere Betriebswerte P können der Regeleinrichtung 60 über den Eingang i zugeführt werden.

Die Eingänge a bis i gehören zu dem ersten Regelmodul 62 der Regeleinrichtung 60. Sie berücksichtigen die für den zu regelnden Prozeßabschnitt verwendeten Prozeßgrößen P_{S}, P_{I}, P_{WL}, P_{FM}, M_{PD}, D_{FD}, KL, TB und P. Anhand eines auf dem verfahrenstechnischen Wissen über das Reserveleistungspotential der einzelnen Maßnahmen basierenden Algorithmus werden im ersten Regelmodul 62 Entscheidungskriterien für eine Maßnahmenkombination erstellt. Dazu wird der durch die Generatorleistung P_{S} und die Fernwärmeleistung P_{FW} sowie durch den Prozeßdampfmassenstrom M_{PD} und den Androsslungsgrad D_{FD} charakterisierte aktuelle Betriebszustand ermittelt. Dabei wird für jeden aktuellen Betriebszustand eine optimale Maßnahmenkombinacion L_{1...n} für die Deckung der momentan geforderten Reserveleistung festgelegt. Hierbei werden auch die Begrenzungen durch die Kannlast KL und die technologische Bereitschaft TB der einzelnen Maßnahmen Lₙ berücksichtigt. Anschließend werden für die festgelegten Maßnahmen Lₙ die Leistungsanteile P_{SRM(1...n)} berechnet und als Ausgangsgröße 1 wird ein Freigabesignal für die beteiligten Maßnahmen Lₙ gebildet. Außerdem wird als weitere Ausgangsgröße k eine Zusatzwärmeleistung Δ P_{WL} für die (nicht dargestellte) Dampferzeugerregelung bestimmt.

Die Ausgangsgrößen j und 1 sowie die Fernwärmeleistung P_{FW} bilden die Eingangsgrößen des Regelmoduls 64. Im Regelmodul 64 werden als Ausgangsgrößen m bis r Stellungs-Sollwerte Y_{FD}, Y_{ÜKL}, Y_{HKKL}, Y_{PDKL} und Y_{KL} für das Frischdampfstellventil 10, die Überströmklappe 32, die Stellventile 28 und 36, das Stellventil 22 bzw. die Stellventile 12, 18, 24 und 34 gebildet. Die berechneten Stellungs-Sollwerte Y werden mittels dem mit dem Regelmodul 64 verbundenen Regelmodul 66 korrigiert, dem als Eingangsgrößen der Leistungs-Sollwert P_{S} und der Mehrleistungs-Istwert P_{I} zugeführt werden.

Im Regelmodul 68 werden als Ausgangsgrößen s und t je nach Maßnahme Lₙ. Stellung der Klappen oder Stellventile 10, 12, 18, 22, 24, 28, 30, 32, 34 und/oder 36 sowie deren Stellungsänderungsgeschwindigkeiten die Korrekturen für Stellungs-Sollwerte Y_{KP}, Y_{NKP} der Kondensat- bzw. Nebenkondensatregelung NKR_{1,2,3} gebildet. Dazu werden dem Regelmodul 63 als Eingangsgrößen die Ausgangsgrößen j und r der Regelmodule 62 bzw. 64, d. h. der Stellungs-Sollwert Y_{KL} und die Maßnahmenkombination L_{1..n}, zugeführt.

Das Regelmodul 70 beinhaltet Algorithmen für die Bestimmung des notwendigen Drosselgrades für das Frischdampf-Stellventil 10. Dazu werden diesem Regelmodul 70 als Eingangsgrößen die

Ausgangsgröße j und eine weitere, den aktuellen Betriebszustand des Kraftwerksblocks beschreibende Ausgangsgröße v aus dem Regelmodul 62 zugeführt. Der berechnete Drosselgrad des Frischdampf-Stellventils 10 wird mit einem vorgewählten Drosselgrad verglichen und als Ausgangsgröße u wird ein automatisch angepaßter Drosselgrad D_{FD} ausgegeben.

Die Androsselung des Frischdampf-Stellventils oder -Stellorgans 10, das den der Hochdruck-Teilturbine 2 zugeführten Frischdampf-Massenstrom einstellt, baut somit einen geregelt aktivierbaren Energiespeicher auf, der über den ermittelten Stellungs-Sollwert Y_{FD} und über den Drosselgrad D_{FD} gesteuert aufgeladen oder zur Bereitstellung einer Reserveleistung gesteuert entladen werden kann. Zur Aktivierung der weiteren Energiespeicher können die Anzapfdampf- und Abdampf-Teilströme FD_{1,2}, MD_{1...5}, ND_{1...5} sowie die Förderung des Kondensats K und des Nebenkondensats NK einzeln oder gemeinsam sowie teilweise oder vollständig mittels der entsprechenden Stellorgane (Stellventile, Pumpen) 12, 18, 22, 24, 28, 32, 34 36, 42, 46, 48, 50 gedrosselt werden. Damit wird die Bespeisung der Vorwärmstraßen 14, 26 zeitweise reduziert oder eingestellt. Die Steuerung erfolgt ebenfalls über die Regeleinrichtung 60 anhand der entsprechenden Stellungs-Sollwerte Y.

Die der Regeleinrichtung 60 zugrundeliegende Zusammenführung der verfahrenstechnischen Kenntnisse und vertraglicher Bestimmungen, die insbesondere bei der Prozeßdampf- und Heizdampfversorgung einen besonderen Einfluß auf die Auswahl der Maßnahmen Lₙ haben können, gewährleistet sowohl eine wirtschaftlich bestmögliche Ausnutzung der vorhandenen Energiespeicher, als auch eine schonende Fahrweise der Kraftwerksanlage.

## Patentansprüche

1. Verfahren zur schnellen Leistungsregelung einer Kraftwerksanlage mit einem eine Dampfturbine und einen Generator aufweisenden Turbosatz, bei dem zur Einstellung einer Generator-Mehrleistung im Anlagenprozeß vorhandene Energiespeicher aktiviert werden, wobei zusätzlich zur Generatorleistung (P_{S}, P_{I}) mindestens eine weitere den aktuellen Betriebszustand charakterisierende Prozeßgröße (P_{S}, P_{I}, P_{WL}, P_{WF}, M_{PD}, D_{FD}, KL, TB, P) zur Ermittlung einer Anzahl von Stellungs-Sollwerten (Y,D_{FD}) herangezogen wird, **dadurch gekennzeichnet, daß** als erste weitere Prozeßgröße (P_{S}, P_{I}, P_{WL}, P_{MF}, M_{PD}, D_{FD}, KL, TB, P) zur Ermittlung der Stellungs-Sollwerte (Y, D_{FD}) eine aus dem Anlagenprozeß ausgekoppelte Wärmeleistung (P_{FW}) herangezogen wird.

2. Verfahren nach Anspruch 1,
**dadurch gekennzeichnet, daß** als zusätzliche weitere Prozeßgröße der Drosselgrad (D_{FD}) mindestens eines mit der Dampfturbine (2, 4, 6) verbundenen Stellorgans (10) verwendet wird.

3. Verfahren nach Anspruch 1 oder 2,
**dadurch gekennzeichnet, daß** als zusätzliche weitere Prozeßgröße ein dem Anlagenprozeß entnommener Dampfmassenstrom (M_{PD}) herangezogen wird.

4. Verfahren nach einem der Ansprüche 1 bis 3,
**dadurch gekennzeichnet, daß** als zusätzliche weitere Prozeßgröße der Wärmeleistungs-Istwert (P_{WL}) des Anlagenprozesses herangezogen wird.

5. Verfahren nach einem der Ansprüche 1 bis 4,
**dadurch gekennzeichnet, daß** zur Ermittlung der Stellungs-Sollwerte (y) Informationen über die Aktivierbarkeit (TB) der Energiespeicher berücksichtigt werden.

6. Vorrichtung zur schnellen Leistungsregelung einer Kraftwerksanlage mit einem eine Dampfturbine und (2, 4, 6) und einen Generator aufweisenden Turbosatz und mit Mitteln zur Aktivierung von im Anlagenprozeß vorhandenen Energiespeichern zur Einstellung einer Generator-Mehrleistung, die eine Regeleinrichtung (60) umfassen, deren Eingänge (a bis i) Leistungswerte (P_{S} ,P_{I}) des Generators (8) sowie mindestens eine weitere Prozeßgröße (P_{S}, P_{I}, P_{WL}, P_{WF}, M_{PD}, D_{FD}, KL, TB, P) beinhalten, und deren Ausgänge (n bis u) Stellungs-Sollwerte (Y) für eine Anzahl von mit der Dampfturbine (2, 4, 6) verbundene Stellorgane (10, 12, 18, 22, 24, 28, 32, 34, 36, 42, 46, 48, 50) angeben, **dadurch gekennzeichnet, daß** einer der Eingänge (a bis i) mit einer aus dem Anlagenprozeß ausgekoppelten Wärmeleistung (P_{FW}) beaufschlagt ist.

7. Vorrichtung nach Anspruch 6,
**dadurch gekennzeichnet, daß** die Regeleinrichtung (60) ein erstes Regelmodul (62) umfaßt, dessen Eingänge (a bis i) die Prozeßgrößen (P_{S}, P_{I}, P_{WL}, P_{WF}, M_{PD}, D_{FD}, KL, TB, P) beinhalten, und dessen Ausgang (j) Anteilswerte einer Maßnahmenkombination (Lₙ) zur Bereitstellung einer Reserveleistung angibt.

8. Vorrichtung nach Anspruch 7,
**gekennzeichnet durch** ein zweites Regelmodul (64), dessen Eingang mit dem Ausgang (j) des ersten Regelmoduls (62) verbunden ist und dessen Ausgänge (n bis r) Stellungs-Sollwerte (Y) für Dampf-Stellorgane (10, 12, 18, 24, 28, 32, 34, 36) angeben.

9. Vorrichtung nach Anspruch 8,
**gekennzeichnet durch** ein ausgangsseitig mit dem zweiten Regelmodul (64) verbundenes drittes Regelmodul (66), dessen Eingänge (a, b) die Leistungswerte (P_{S}, P_{I}) des Generators (8) beinhalten.

10. Vorrichtung nach Anspruch 8 oder 9,
**gekennzeichnet durch** ein viertes Regelmodul (68), dessen Eingänge mit mindestens einem Ausgang (r) des zweiten Regelmoduls (64) und einen Ausgang (j) des ersten Regelmoduls (62) verbunden sind, und dessen Ausgänge (s, t) Stellungs-Sollwerte (Y_{KP}, Y_{NKR}) für Kondensat-Stellorgane (42, 46, 48, 50) angeben.

11. Vorrichtung nach einem der Ansprüche 6 bis 10,
**gekennzeichnet durch** ein fünftes Regelmodul (70) zur Korrektur des aktuellen Drosselgrades (D_{FD}) mindestens eines Stellorgans (10).

## Claims

1. Method for quick power regulation of a power station system having a turbo-generator set exhibiting a steam turbine and a generator, in which method energy storage mechanisms present in the system process are activated in order to set an extra generator power, use being made, in addition to the generator power (P_{S}, P_{I}) of at least one further process variable (P_{S}, P_{I}, P_{WL}, P_{FW}, M_{PD}, D_{FD}, KL, TB, P) **characterizing** the current operating state, in order to determine a number of desired setting values (Y, D_{FD}), **characterized in that** a thermal power (P_{FW}), coupled out from the system process, is used as the first further process variable (P_{S}, P_{I}, P_{WL}, P_{FW}, M_{PD}, D_{FD}, KL, TB, P), in order to determine the desired setting values (Y, D_{FD}).

2. Method according to Claim 1, **characterized in that** the degree of restriction (D_{FD}) of at least one actuator (10) connected to the steam turbine (2, 4, 6) is used as an additional further process variable.

3. Method according to Claim 1 or 2, **characterized in that** a steam mass flow (M_{PD}) extracted from the system process is used as an additional further process variable.

4. Method according to one of Claims 1 to 3, **characterized in that** the actual value of the thermal power (P_{WL}) of the system process is used as an additional further process variable.

5. Method according to one of Claims 1 to 4,
**characterized in that** information on the activatability (TB) of the energy storage mechanisms is taken into account in order to determine the desired setting values (Y).

6. Device for quick power regulation of a power station system having a turbo-generator set exhibiting a steam turbine (2, 4, 6) and a generator and having means for activating energy storage mechanisms present in the system process for the purpose of setting an extra generator power, which means comprise a regulating device (60), whose inputs (a to i) contain power values (P_{S}, P_{I}) of the generator (8) and at least one further process variable (P_{S}, P_{I}, P_{WL}, P_{FW}, M_{PD}, D_{FD}, KL, TB, P), and whose outputs (n to u) specify desired setting values (Y) for a number of actuators (10, 12, 18, 22, 24, 28, 32, 34, 36, 42, 46, 48, 50) connected to the steam turbine (2, 4, 6), **characterized in that** one of the inputs (a to i) is acted upon by a thermal power (P_{FW}) coupled out from the system process.

7. Device according to Claim 6, **characterized in that** the regulating device (60) comprises a first regulating module (62), whose inputs (a to i) contain the process variables (P_{S}, P_{I}, P_{WL}, P_{FW}, M_{PD}, D_{FD}, KL, TB, P), and whose output (j) specifies component values of a combination of measures (Lₙ) for providing a reserve power.

8. Device according to Claim 7, **characterized by** a second regulating module (64), whose input is connected to the output (j) of the first regulating module (62) and whose outputs (n to r) specify desired setting values (Y) for steam actuators (10, 12, 18, 24, 28, 32, 34, 36).

9. Device according to Claim 8, **characterized by** a third regulating module (66) which is connected on the output side to the second regulating module (64) and whose inputs (a, b) contain the power values (P_{S}, P_{I}) of the generator (8).

10. Device according to Claim 8 or 9, **characterized by** a fourth regulating module (68), whose inputs are connected to at least one output (r) of a second regulating module (64) and to an output (j) of the first regulating module (62), and whose outputs (s, t) specify desired setting values (Y_{KP}, Y_{NKR}) for condensate actuators (42, 46, 48, 50).

11. Device according to one of Claims 6 to 10, **characterized by** a fifth regulating module (70) for correcting the current degree of restriction (D_{FD}) of at least one actuator (10).

## Revendications

1. Procédé pour la régulation rapide de la puissance d'une centrale électrique avec un turbo-générateur comportant une turbine à vapeur et une génératrice, des accumulateurs d'énergie qui existent dans le processus de l'installation étant activés pour le réglage d'une puissance supplémentaire de génératrice et, en plus de la puissance de génératrice (P_{S}, P_{I}), au moins une autre grandeur de processus (P_{S}, P_{I}, P_{WL}, P_{FW}, M_{PD}, D_{FD}, KL, TB, P) qui **caractérise** l'état de fonctionnement actuel étant exploitée pour la détermination d'un certain nombre de valeurs de consigne de position (Y, D_{FD}), **caractérisé par le fait qu'**on exploite comme première autre grandeur de processus (P_{S}, P_{I}, P_{WL}, P_{FW}, M_{PD}, D_{FD}, KL, TB, P) pour la détermination des valeurs de consigne de position (Y, D_{FD}) une puissance calorifique (P_{FW}) sortie du processus de l'installation.

2. Procédé selon la revendication 1, **caractérisé par le fait qu'**on utilise comme autre grandeur de processus supplémentaire le degré d'étranglement (D_{FD}) d'au moins un organe de réglage (10) relié à la turbine à vapeur (2, 4, 6).

3. Procédé selon la revendication 1 ou 2, **caractérisé par le fait qu'**on exploite comme autre grandeur de processus supplémentaire un flux massique de vapeur (M_{PD}) prélevé du processus de l'installation.

4. Procédé selon l'une des revendications 1 à 3, **caractérisé par le fait qu'**on exploite comme autre grandeur de processus supplémentaire la valeur réelle de puissance calorifique (P_{WL}) du processus de l'installation.

5. Procédé selon l'une des revendications 1 à 4, **caractérisé par le fait que**, pour la détermination des valeurs de consigne de position (y), on prend en compte des informations sur la possibilité d'activation (TB) des accumulateurs d'énergie.

6. Dispositif pour la régulation rapide de la puissance d'une centrale électrique avec un turbo-générateur comportant une turbine à vapeur (2, 4, 6) et une génératrice et avec des moyens qui sont destinés à activer des accumulateurs d'énergie existant dans le processus d'installation pour le réglage d'une puissance supplémentaire de génératrice et qui comprennent un dispositif de régulation (60) dont les entrées (a à i) contiennent des valeurs de puissance (P_{S}, P_{I}) de la génératrice (8) ainsi qu'au moins une autre grandeur de processus (P_{S}, P_{I}, P_{WL}, P_{FW}, M_{PD}, D_{FD}, KL, TB, P) et dont les sorties (n à u) donnent des valeurs de consigne de position (Y) pour un certain nombre d'organes de réglage (10, 12, 18, 22, 24, 28, 32, 34, 36, 42, 46, 48, 50) reliés à la turbine à vapeur (2, 4, 6), **caractérisé par le fait que** l'une des entrées (a à i) reçoit une puissance calorifique (P_{FW}) sortie du processus de l'installation.

7. Dispositif selon la revendication 6, **caractérisé par le fait que** le dispositif de régulation (60) comprend un premier module de régulation (62) dont les entrées (a à i) contiennent les grandeurs de processus (P_{S}, P_{I}, P_{WL}, P_{FW}, M_{PD}, D_{FD}, KL, TB, P) et dont la sortie (j) donne des valeurs de proportion d'une combinaison de mesures (Lₙ) destinée à fournir une puissance de réserve.

8. Dispositif selon la revendication 7, **caractérisé par** un deuxième module de régulation (64) dont l'entrée est reliée à la sortie (j) du premier module de régulation (62) et dont les sorties (n à r) donnent des valeurs de consigne de position (Y) pour des organes de réglage de vapeur (10, 12, 18, 24, 28, 32, 34, 36).

9. Dispositif selon la revendication 8, **caractérisé par** un troisième module de régulation (66) qui est relié en sortie au deuxième module de régulation (64) et dont les entrées (a, b) contiennent les valeurs de puissance (P_{S}, P_{I}) de la génératrice (8).

10. Dispositif selon la revendication 8 ou 9, **caractérisé par** un quatrième module de régulation (68) dont les entrées sont reliées à au moins une sortie (r) du deuxième module de régulation (64) et à une sortie (j) du premier module de régulation (62) et dont les sorties (s, t) donnent des valeurs de consigne de position (Y_{KP}, Y_{NKR}) pour des organes de réglage de condensat (42, 46, 48, 50).

11. Dispositif selon l'une des revendications 6 à 10, **caractérisé par** un cinquième module de régulation (70) pour la correction du degré d'étranglement actuel (D_{FD}) d'au moins un organe de réglage (10).
